# EUROPÄISCHE PATENTANMELDUNG

(11) **EP 1 890 209 A1**
(43) Veröffentlichungstag der Anmeldung: **20.02.2008**
(21) Anmeldenummer: 06017041.2
(22) Anmeldetag: 16.08.2006
(51) Int. Cl.: G05B 19/05, G06F 9/44

(54) **System und Verfahren zum Visualisieren von Sprüngen innerhalb eines Schrittketteneditors**

(71) Anmelder: SIEMENS AKTIENGESELLSCHAFT, 80333 München (DE)
(72) Erfinder: Pfahlmann, Lothar, 91083 Baiersdorf (DE); Rachinger, Bernd, 91575 Windsbach (DE); Schaer, Stephan, 90455 Nürnberg (DE)

(57) **Zusammenfassung**

Die Erfindung betrifft einen Schrittketteneditor (1) zur Visualisierung und/oder Erstellung von mindestens einer, die Bearbeitungsschritte einer Speicherprogrammierbaren Steuerung beschreibenden Schrittkette (2), wobei die mindestens eine Schrittkette (2) den Bearbeitungsschritten entsprechende Grafikelemente (3) aufweist, wobei innerhalb der mindestens einen Schrittkette (2) direkt aufeinander folgende Grafikelemente (3) mittels Linien (4) verbindbar sind, wobei innerhalb der mindestens einen Schrittkette (2) nicht direkt aufeinander folgende Grafikelemente (3) mittels Sprüngen verbindbar sind, wobei ein Sprung ein Sprungbeginn (5) und ein Sprungziel (6) innerhalb der Schrittkette (2) aufweist und wobei ein Sprung innerhalb der Schrittkette mithilfe einer den Sprungbeginn (5) und das Sprungziel (6) miteinander verbindenden Verbindungslinie (7) visualisierbar ist.

## Beschreibung

Die Erfindung betrifft ein System und ein Verfahren zur Visualisierung und/oder Erstellung von mindestens einer, die Bearbeitungsschritte einer speicherprogrammierbaren Steuerung beschreibenden Schrittkette.

Die einzelnen Arbeitsschritte einer speicherprogrammierbaren Steuerung innerhalb eines Automatisierungssystems werden heutzutage in der Regel mit Hilfe von graphischen Editoren betrieben bzw. projektiert. Hierbei werden die einzelnen Arbeitsschritte in der Regel durch Grafikelemente innerhalb des Editors repräsentiert. Mehrere Grafikelemente werden dann zu einer Schrittkette, die die Arbeitsschritte der speicherprogrammierbaren Steuerung beschreibt, zusammengefügt. Eine Schrittkette kann hierbei Verzweigungen bzw. simultan oder alternativ abzuarbeitende Teil-Schrittketten aufweisen, die Schrittkette kann jedoch auch Sprünge zwischen einzelnen Grafikelementen, die innerhalb der Schrittkette weiter voneinander entfernt liegen aufweisen. Durch die Verzweigungen bzw. die Sprünge werden entsprechende Parallelaktivitäten bzw. Rücksprünge innerhalb von Bearbeitungszyklen für die speicherprogrammierbare Steuerung beschrieben bzw. projektiert. Die Schrittketten weisen allgemein Grafikelemente auf, welche zur Verbindung einfache Verbindungslinien aufweisen. Die Verzweigungen werden ebenfalls mit Hilfe von Verbindungslinien dargestellt.

Sprünge zwischen innerhalb der Schrittkette weiter voneinander entfernten Schritten, welche durch die Grafikelemente repräsentiert werden, werden heutzutage in der Regel derart dargestellt, dass am Beginn des Sprunges lediglich die Nummer oder eine andere, dass entsprechende Zielgrafikelement beschreibende Adresse angegeben ist. Hierdurch muss der Benutzer des Schrittketteneditors bei einem Sprung selber innerhalb der grafischen Darstellung der Schrittkette das entsprechende Zielelement suchen. Dies ist unter Umständen bei größeren Schrittketten mit vielen Sprüngen, vielen Grafikelementen und vielen Verzweigungen schwierig.

Die Aufgabe der vorliegenden Erfindung besteht darin, die Visualisierung von Sprüngen innerhalb der Schrittkette, welche in einem Schrittketteneditor dargestellt ist, zu verbessern.

Die Aufgabe wird gelöst durch einen Schrittketteneditor zur Visualisierung und/oder Erstellung von mindestens einer, die Bearbeitungsschritte einer speicherprogrammierbaren Steuerung beschreibenden Schrittkette, wobei die mindestens eine Schrittkette den Bearbeitungsschritten entsprechende Grafikelemente aufweist, wobei innerhalb der mindestens einen Schrittkette direkt aufeinander folgende Grafikelemente mittels Linien verbindbar sind, wobei innerhalb der mindestens einen Schrittkette nicht direkt aufeinander folgende Grafikelemente mittels Sprüngen verbindbar sind, wobei ein Sprung ein Sprungbeginn und ein Sprungziel innerhalb der Schrittkette aufweist und wobei ein Sprung innerhalb der Schrittkette mit Hilfe einer den Sprungbeginn und das Sprungziel miteinander verbindenden Verbindungslinie visualisierbar ist.

Des Weiteren wird die Aufgabe gelöst durch ein Verfahren zur Visualisierung und/oder Erstellung von mindestens einer, die Bearbeitungsschritte einer speicherprogrammierbaren Steuerung beschreibenden Schrittkette mittels eines Schrittketteneditors, bei dem die Bearbeitungsschritte durch Grafikelemente der mindestens einen Schrittkette repräsentiert werden, innerhalb der mindestens einen Schrittkette direkt aufeinander folgende Grafikelemente mittels Linien verbunden werden, innerhalb der mindestens einen Schrittkette nicht direkt aufeinander folgende Grafikelemente mittels Sprüngen verbunden werden, ein Sprung durch einen Sprungbeginn und ein Sprungziel innerhalb der Schrittkette beschrieben wird und ein Sprung innerhalb der Schrittkette mit Hilfe einer den Sprungbeginn und das Sprungziel miteinander verbindenden Verbindungslinie visualisiert wird.

Der Erfindung liegt die Erkenntnis zugrunde, dass es für einen Projekteur bzw. einen Benutzer eines Schrittketteneditors schwierig ist, die logischen Sprünge, die innerhalb einer Schrittkette angelegt worden sind, nachzuvollziehen. Eine Visualisierung der bereits angelegten Sprünge innerhalb der Schrittkette ist bisher im Rahmen von Schrittketteneditoren nicht umgesetzt. Somit ist der Zusammenhang zwischen einem Sprungbeginn und einem Sprungziel schwer bzw. umständlich zu ermitteln, da der Zusammenhang ausschließlich durch die Angabe des jeweiligen Zielschrittes am Sprungbeginn hergestellt wird.

Das erfindungsgemäße System sorgt nunmehr durch die Visualisierung des Sprunges, indem eine Verbindungslinie zwischen dem Sprungbeginn und dem Sprungziel erzeugt wird, für eine bessere Übersichtlichkeit der Sprünge innerhalb von Schrittketten. Dies ist insbesondere von Vorteil bei großen und komplexen Schrittketten, in denen die Benutzer dann schneller nachvollziehen können, welche Sprünge angelegt bzw. projektiert wurden, indem sie den Visualisierungslinien in Form von Pfaden zum entsprechenden Sprungziel besser folgen können. Innerhalb der Schrittkette ist somit der Gesamtaufbau wesentlich schneller erkennbar. Es ist leichter möglich, für den Projekteur, sich ein Bild von den Beziehungen innerhalb der Schrittkette zu machen. Hierdurch wird dem Projekteur insgesamt eine übersichtlichere Darstellung der entsprechenden projektierten Schrittketten geliefert.

Eine weitere vorteilhafte Ausbildung der Erfindung ist dadurch gekennzeichnet, dass ein Eingabemenü für einen Benutzer zur Angabe eines Sprungbeginns und eines Sprungziels vorgesehen ist. Hierdurch kann der Benutzer auf einfache Weise angeben, von welchem Punkt der Schrittkette aus er einen Sprung anlegen will und zu welchem Punkt innerhalb der Schrittkette er dann springen möchte. Eine einfache Bedienbarkeit des Schrittketteneditors ist somit gewährleistet.

Eine weitere vorteilhafte Ausbildung der Erfindung ist dadurch gekennzeichnet, dass die Verbindungslinie nach Angabe des Sprungbeginns und des Sprungziels automatisch durch den Schrittketteneditor erzeugbar ist. Hierdurch wird dem Benutzer auf einfache Weise die Verbindungslinie durch das System automatisch erzeugt. Er muss nicht, wie aus anderen grafischen Editoren bekannt, die einzelnen Grafikelemente, zwischen den ein Sprung erfolgen soll, selbst mit Hilfe von einer Verbindungslinie verbinden. Lediglich durch die Angabe des Absprungorts und die Angabe des Zielorts wird die Verbindungslinie automatisch erstellt und damit auch logisch projektiert.

Eine weitere vorteilhafte Ausbildung der Erfindung ist dadurch gekennzeichnet, dass die Verbindungslinie durch den Benutzer ein- und ausblendbar ist. Dies ist insbesondere von Vorteil, wenn innerhalb von komplexen Schritten viele Sprünge projektiert worden sind und somit in vollständiger Ausbildung viele Verbindungslinien zur Visualisierung der Sprünge dargestellt werden. In diesem Fall kann der Benutzer eigenhändig entscheiden, welche Verbindungslinien er anzeigen möchte und welche Verbindungslinien nicht angezeigt werden sollen. Dies kann in vorteilhafter Weise mit Hilfe von einfachen Mausoperationen erfolgen, indem beispielsweise der Benutzer auf den Absprungort eines Sprunges klickt und damit die entsprechende Verbindungslinie, die bereits automatisch vom System erzeugt wurde, dargestellt wird.

Eine weitere vorteilhafte Ausbildung der Erfindung ist dadurch gekennzeichnet, dass mindestens ein Kontextmenü zur Eingabe von die grafische Darstellung der mindestens einen Verbindungslinie beeinflussenden Befehlen durch den Benutzer vorgesehen ist. Hierdurch wird dem Benutzer die Möglichkeit gegeben, die bereits dargestellte Verbindungslinie in Bezug auf ihre Art und Weise wie sie dargestellt wird, zu verändern. Beispielsweise kann die Verbindungslinie in Bezug auf die Farbe in der sie dargestellt wird oder auch in Bezug auf die Stichform, d.h. Liniendicke und Art der Linienunterbrechung durch den Benutzer frei ausgewählt werden.

Eine weitere vorteilhafte Ausbildung der Erfindung ist dadurch gekennzeichnet, dass ein Sprung innerhalb der Schrittkette jeweils ein eigenes Kontextmenü zur Beeinflussung der grafischen Darstellung der den Sprung visualisierenden Verbindungslinie durch den Benutzer aufweist. Hierdurch wird es dem Benutzer ermöglicht, jede Verbindungslinie individuell grafisch unterschiedlich darstellen zu lassen. Hierdurch wird insbesondere in komplexen Schrittkettensystemen mit vielen Sprüngen die Möglichkeit gegeben, die verschiedenen Verbindungslinien auf einfache Weise voneinander zu unterscheiden. Jede Verbindungslinie kann individuell vom Benutzer in einer von ihm vorgezogenen Weise dargestellt werden. So ist es dem Benutzer mit Hilfe dieser Funktion beispielsweise auch möglich, mehrere Verbindungslinien, die unter Umständen semantisch zu einer Gruppe zusammengehören mittels der gleichen Form und Farbe darzustellen, so dass er unmittelbar erkennen kann, dass diese Verbindungslinien eine einheitliche oder gemeinschaftliche Eigenschaft aufweisen.

Eine weitere vorteilhafte Ausbildung der Erfindung ist dadurch gekennzeichnet, dass vom Sprungbeginn ausgehend eine horizontale Linie als Teil der Verbindungslinie gezogen wird, wobei die horizontale Linie bis in eine Zielspalte gezogen wird, wobei die Zielspalte die Spalte in der Darstellung der Schrittkette bildet, innerhalb der die Verbindungslinie als vertikale Linie bis zum Sprungziel des Sprunges gezogen wird. Hierdurch wird eine einheitliche Form der Darstellung gewährleistet. Ausgehend von einem Sprungbeginn wird erstmal eine horizontale Teillinie gezogen die eine Länge aufweist, so dass sie bis zu der Spalte reicht, innerhalb derer die Verbindungslinie dann vertikal verlängert wird, so dass sie schließlich am Sprungziel des Sprunges anlangt. Diese Vorgehensweise gewährt, dass die Verbindungslinien nicht kreuz und quer durch die gesamte Schrittkette gezogen werden, sondern dass sie einer bestimmten Struktur folgen und im rechten Winkel abknicken. Diese Form der Darstellung erzeugt eine für den Benutzer übersichtliche Visualisierung der projektierten bzw. angelegten Sprünge.

Eine weitere vorteilhafte Ausbildung der Erfindung ist dadurch gekennzeichnet, dass Verbindungslinien innerhalb der gleichen Zielspalte und/oder Verbindungslinien auf gleicher horizontaler Höhe innerhalb der Schrittkette nebeneinander dargestellt werden. Hierdurch wird erreicht, dass die Verbindungslinien der Sprünge innerhalb der gleichen Spalte bzw. auf gleicher Höhe sich nicht überschneiden bzw. überlagern. Dieses wird mit Hilfe eines Überprüfungsalgorithmus gewährleistet. Der Überprüfungsalgorithmus prüft ab, ob an der momentanen Stelle bereits eine Sprungverbindung in Form einer Verbindungslinie visualisiert ist. Besteht bereits eine Verbindungslinie zur Visualisierung der jeweiligen Sprungverbindung, so wird die neu anzulegende Verbindungslinie parallel zur bereits bestehenden Verbindungslinie in einem Mindestabstand angelegt, so dass sie noch auf ähnlicher Höhe und innerhalb der gleichen Zielspalte dargestellt wird, jedoch derart weit von der bereits bestehenden Verbindungslinie getrennt, dass ein Benutzer die zwei Linien als getrennte Linien wahrnehmen kann.

Im Folgenden wird die Erfindung anhand der in den Figuren dargestellten Ausführungsbeispiele beschrieben und erläutert.

Es zeigen:
- FIG 1: eine Darstellung von Verbindungslinien innerhalb einer Schrittkette eines Schrittketteneditors,
- FIG 2: die Darstellung mehrerer parallel verlaufender Verbindungslinien.

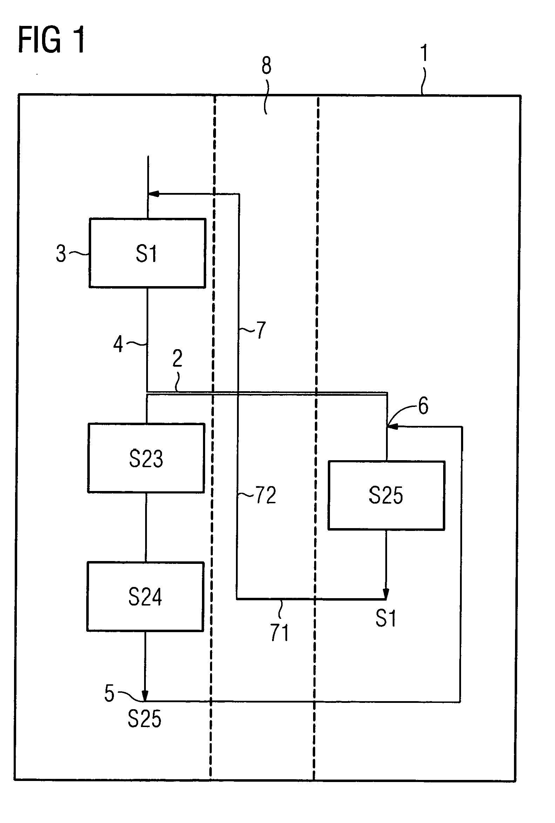

FIG 1 zeigt eine Schrittkette 2 innerhalb eines Schrittketteneditors 1. Die Schrittkette 2 verfügt über Grafikelemente 3. Die Grafikelemente sind mit Hilfe von Linien 4 miteinander verbunden. Zwischen den einzelnen Grafikelementen 3, die Bearbeitungsschritte auf einer speicherprogrammierbaren Steuerung darstellen, können innerhalb des Schrittketteneditors 1 Sprünge projektiert werden. Die Sprünge werden in dem erfindungsgemäßen System derart dargestellt, dass zwischen einem Sprungbeginn 5 und einem Sprungziel 6 eine Verbindungslinie 7 angelegt wird.

Innerhalb des Schrittketteneditors 1 kann ein Benutzer die Verbindungslinie 7 derart erzeugen, indem er ein Sprungbeginn 5 und ein Sprungziel 6 über ein Eingabemenü eingibt. Die Verbindungslinien 7 werden von dem System dann automatisch dargestellt. Hierbei werden die Verbindungslinien 7 derart dargestellt, dass eine horizontale Teillinie 71 ausgehend vom Sprungbeginn 5 derart gezogen wird, dass sie die Länge erreicht, die notwendig ist, um in der Zielspalte 8 dann in eine vertikale Teillinie 72 überzugehen, die bis zum Sprungziel 6 in der vertikalen Zielspalte 8 gezogen wird. Hierbei sind die einzelnen Verbindungslinien 7 mit ihren Teillinien 71, 72 in beliebiger Form und Farbe darstellbar.

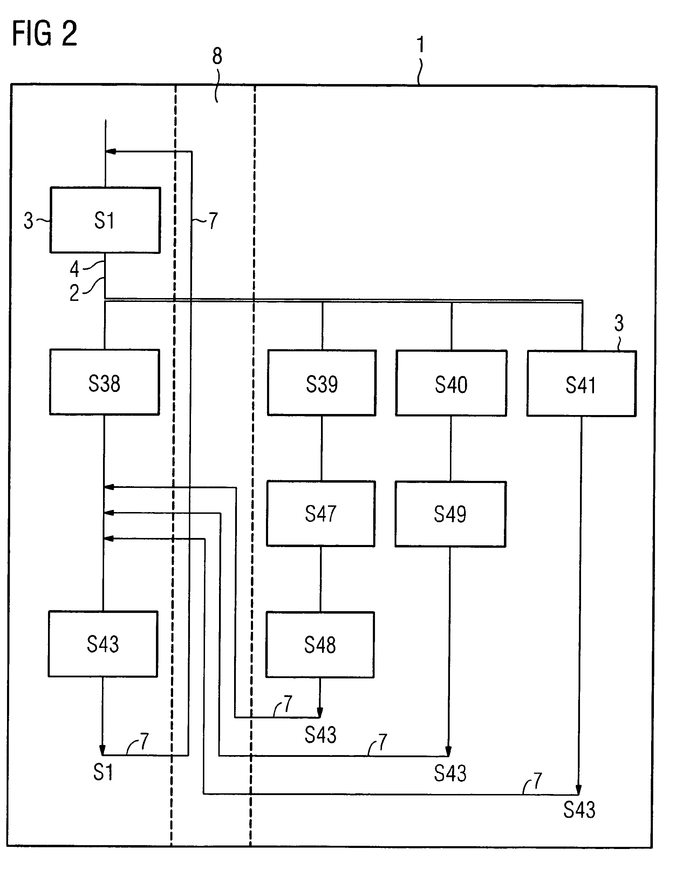

FIG 2 zeigt ein weiteres Ausführungsbeispiel einer Schrittkette 2 in einem Schrittketteneditor 1 mit Grafikelementen 3 und Linien 4 die die Grafikelemente, welche direkt aufeinander folgen innerhalb der Schrittkette 2 miteinander verbinden. In FIG 2 sind ebenfalls Verbindungslinien 7, welche die Sprünge innerhalb der Schrittkette 2 visualisieren, dargestellt. Hierbei sind mehrere Verbindungslinien innerhalb der Zielspalte 8 dargestellt, die parallel zueinander laufen. In dem erfindungsgemäßen System werden diese innerhalb einer Zielspalte laufenden Verbindungslinie 7 derart dargestellt, dass sie sich nicht direkt überlappen, sondern vielmehr parallel zueinander angeordnet sind. Ebenfalls Verbindungslinien, die das gleiche Sprungziel haben bzw. vom gleichen Sprungbeginn ausgehen und somit auf gleicher horizontaler Ebene anzulegen sind, werden nicht überlappend sondern vielmehr parallel zueinander dargestellt. Hierdurch wird eine einfache Übersichtlichkeit des erfindungsgemäßen Systems gewährleistet.

## Patentansprüche

1. Schrittketteneditor (1) zur Visualisierung und/oder Erstellung von mindestens einer, die Bearbeitungsschritte einer Speicherprogrammierbaren Steuerung beschreibenden Schrittkette (2),
• wobei die mindestens eine Schrittkette (2) den Bearbeitungsschritten entsprechende Grafikelemente (3) aufweist,
• wobei innerhalb der mindestens einen Schrittkette (2) direkt aufeinander folgende Grafikelemente (3) mittels Linien (4) verbindbar sind,
• wobei innerhalb der mindestens einen Schrittkette (2) nicht direkt aufeinander folgende Grafikelemente (3) mittels Sprüngen verbindbar sind,
• wobei ein Sprung ein Sprungbeginn (5) und ein Sprungziel (6) innerhalb der Schrittkette (2) aufweist und
• wobei ein Sprung innerhalb der Schrittkette mithilfe einer den Sprungbeginn (5) und das Sprungziel (6) miteinander verbindenden Verbindungslinie (7) visualisierbar ist.

2. Schrittketteneditor nach Anspruch 1, mit einem Eingabemenü für einen Benutzer zur Angabe eines Sprungbeginns und eines Sprungziels.

3. Schrittketteneditor nach Anspruch 2, wobei die Verbindungslinie nach Angabe des Sprungbeginns und des Sprungziels automatisch durch den Schrittketteneditor erzeugbar ist.

4. Schrittketteneditor nach einem der Ansprüche 1 bis 3, wobei die Verbindungslinie durch den Benutzer ein- und ausblendbar ist.

5. Schrittketteneditor nach einem der Ansprüche 1 bis 4, mit mindestens einem Kontextmenü zur Eingabe von die graphische Darstellung der mindestens einen Verbindungslinie beeinflussenden Befehlen durch den Benutzer.

6. Schrittketteneditor nach Anspruch 5, wobei das mindestens eine Kontextmenü unterschiedliche Farben und/oder unterschiedliche Strickformen zur Auswahl durch den Benutzer für die graphische Darstellung der Verbindungslinie aufweist.

7. Schrittketteneditor nach Anspruch 5 oder 6, wobei ein Sprung innerhalb der Schrittkette jeweils ein eigenes Kontextmenü zur Beeinflussung der graphischen Darstellung der den Sprung visualisierenden Verbindungslinie durch den Benutzer aufweist.

8. Verfahren zur Visualisierung und/oder Erstellung von mindestens einer, die Bearbeitungsschritte einer Speicherprogrammierbaren Steuerung beschreibenden Schrittkette (2) mittels eines Schrittketteneditors (1), bei dem
• die Bearbeitungsschritte durch Grafikelemente (3) der mindestens einen Schrittkette (2) repräsentiert werden,
• innerhalb der mindestens einen Schrittkette (2) direkt aufeinander folgende Grafikelemente (3) mittels Linien (4) verbunden werden,
• innerhalb der mindestens einen Schrittkette (2) nicht direkt aufeinander folgende Grafikelemente (3) mittels Sprüngen verbunden werden,
• ein Sprung durch einen Sprungbeginn (5) und ein Sprungziel (6) innerhalb der Schrittkette (2) beschrieben wird und
• ein Sprung innerhalb der Schrittkette (2) mithilfe einer den Sprungbeginn (5) und das Sprungziel (6) miteinander verbindenden Verbindungslinie (7) visualisiert wird.

9. Verfahren nach Anspruch 8, bei dem ein Sprungbeginn und eine Sprungziel mithilfe eines Eingabemenüs durch einen Benutzer angegeben wird.

10. Verfahren nach Anspruch 9, bei dem die Verbindungslinie nach Angabe des Sprungbeginns und des Sprungziels automatisch durch den Schrittketteneditor erzeugt wird.

11. Verfahren nach einem der Ansprüche 9 bis 10, bei dem die Verbindungslinie durch den Benutzer ein- und ausgeblendet wird.

12. Verfahren nach einem der Ansprüche 9 bis 11, bei dem die graphische Darstellung der mindestens einen Verbindungslinie beeinflussende Befehle mithilfe mindestens eines Kontextmenüs durch den Benutzer eingegeben werden.

13. Verfahren nach Anspruch 12, bei dem über das mindestens eine Kontextmenü unterschiedliche Farben und/oder unterschiedliche Strickformen durch den Benutzer für die graphische Darstellung der Verbindungslinie ausgewählt werden.

14. Verfahren nach Anspruch 12 oder 13, bei dem die graphische Darstellung der den Sprung visualisierenden Verbindungslinie innerhalb der Schrittkette jeweils mithilfe eines dem Sprung eigenen Kontextmenüs durch den Benutzer beeinflusst wird.

15. Verfahren nach einem der Ansprüche 8 bis 14, bei dem vom Sprungbeginn ausgehend eine horizontale Linie (71) als Teil der Verbindungslinie gezogen wird, wobei die horizontale Linie bis in eine Zielspalte (8) gezogen wird, wobei die Zielspalte die Spalte in der Darstellung der Schrittkette bildet, innerhalb der die Verbindungslinie als vertikale Linie (72) bis zum Sprungziel des Sprunges gezogen wird.

16. Verfahren nach Anspruch 15, bei dem Verbindungslinien innerhalb der gleichen Zielspalte und/oder Verbindungslinien auf gleicher horizontaler Höhe innerhalb der Schrittkette nebeneinander dargestellt werden.
